# EUROPÄISCHE PATENTSCHRIFT

(11) **EP 2 713 142 B1**
(45) Veröffentlichungstag und Bekanntmachung des Hinweises auf die Patenterteilung: **04.01.2017**
(21) Anmeldenummer: 12186630.5
(22) Anmeldetag: 28.09.2012
(51) Int. Cl.: G01D 5/34

(54) **Vorrichtung zur Messung der relativen Position zweier relativ zueinander bewegbarer Objekte**
Device for measuring the relative position of two objects that can be moved relative to each other
Dispositif destiné à mesurer la position relative de deux objets mobiles l'un par rapport à l'autre

(43) Veröffentlichungstag der Anmeldung: 02.04.2014
(73) Patentinhaber: SICK STEGMANN GmbH, 78166 Donaueschingen (DE)
(72) Erfinder: Hopp, David, 78166 Donaueschingen (DE)
(74) Vertreter: Westphal, Mussgnug & Partner Patentanwälte mbB

(56) Entgegenhaltungen:
- FR-A1- 2 868 528
- JP-A- 61 097 521
- US-A- 2 651 771

## Beschreibung

Die Erfindung betrifft eine Vorrichtung zur Messung der relativen Position zweier relativ zueinander bewegbarer Objekte gemäß dem Oberbegriff des Patentanspruchs 1.

Für viele Anwendungen ist es von grundlegender Bedeutung, die relative Position, beispielsweise einen Abstand zweier relativ zueinander entlang einer Achse bewegbarer Objekte, oder den Drehwinkel eines rotierenden Objekts relativ zu einem feststehenden Objekt zu bestimmen. Beispielsweise kann es sich bei dem rotierenden Objekt um die rotierende Welle eines Motors relativ zu einem feststehenden Maschinenteil handeln. Der Maßstab kann sowohl bei der linearen Bewegung als auch bei der Drehbewegung sowohl inkrementell als auch absolut sein. Dabei ist es wünschenswert, eine möglichst toleranzunempfindliche Messung durchführen zu können, welche jedoch eine hohe Genauigkeit aufweist. Im Idealfall erfolgt die Messung berührungslos, um mechanischen Verschleiß zu vermeiden. Daher werden häufig optische Wirkprinzipien eingesetzt.

Zur Erfassung des Drehwinkels einer Motorwelle ist es insbesondere bekannt, einen berührungslosen optischen Sensor basierend auf den Polarisationseigenschaften des Lichts zu verwenden. Derartige Vorrichtungen offenbaren beispielsweise die DE 100 05 227 A1, DE 201 02 192 U1, EP 2 187 178 A1, EP 1 507 137 A1 und US 7 777 879.

Aus der FR 2 868 528 A1 ist eine Vorrichtung zur Messung der relativen Position zweier relativ zueinander entlang einer Achse oder um eine Drehachse bewegbare Objekte mit einem Sender, der unpolarisiertes Licht bereitstellt, mit einem Polarisator und mit wenigstens einem Empfänger, der die durch den Polarisator durchtretende Lichtintensität misst, um ein positionsabhängiges Signal zu erzeugen bekannt, wobei vor dem Empfänger ein Polarisationsfilter angeordnet ist und wobei sich der Empfänger und der Polarisationsfilter in Abhängigkeit von der relativen Position der beiden Objekte relativ zueinander bewegen, und wobei ferner der Polarisationsfilter wenigstens zwei verschiedene Polarisationsrichtungen aufweist.

Bei derartigen Vorrichtungen trifft das Licht einer unpolarisierten Lichtquelle auf einen Polarisator, welcher das Licht idealerweise linear polarisiert und als Codescheibe dient. Das polarisierte Licht trifft auf einen Empfänger, beispielsweise einen Fotodetektor, dem ein weiteres linear polarisierendes Element vorgelagert ist. Je nach relativer Winkelstellung der beiden Polarisatorelemente ergibt sich auf dem Detektor eine unterschiedliche Beleuchtungsintensität. Durch Positionierung des Polarisators beispielsweise auf einer Motorwelle lässt sich der Drehwinkel dieser Welle bestimmen.

Nachteilig bei der Verwendung von Polarisation zur Messung des Drehwinkels zweiter relativ zueinander rotierender Objekte ist, dass der Drehwinkel mechanisch nicht auf 360° absolut messbar ist, sondern lediglich auf 180°. Somit ist kein absolutes Winkelsignal bestimmbar. Um eine Eindeutigkeit um einen relativen Drehwinkel von 360° und damit ein absolutes Winkelsignal zu erhalten, wird nach einer Lösung gesucht, gleichzeitig ein absolutes und ein inkrementales Signal zu generieren, ohne Einbußen bei der Signalqualität zu verursachen.

Die Aufgabe der Erfindung besteht daher darin, bei einem Sensor zur Bestimmung der relativen Position zweier zueinander bewegbarer Objekte basierend auf den Polarisationseigenschaften des Lichts eine Eindeutigkeit der Position zu ermöglichen. Dabei soll in die Vorrichtung möglichst ohne zusätzliche Detektoren oder zusätzliche Auswertalgorithmen auskommen.

Die Aufgabe der Erfindung wird gelöst durch eine Vorrichtung zur Messung der relativen Position zweier relativ zueinander bewegbarer Objekte mit den Merkmalen des Patentanspruchs 1.

Vorteilhafte Ausgestaltungen und Weiterbildungen der Erfindung sind in den abhängigen Ansprüchen angegeben.

Die erfindungsgemäße Vorrichtung zur Messung der relativen Position zweier relativ zueinander entlang einer Achse oder um eine Drehachse bewegbarer Objekte mit einem Sender, der unpolarisiertes Licht bereitstellt, mit einem Polarisator, und mit wenigstens einem Empfänger, der die durch den Polarisator durchtretende Lichtintensität misst, um ein positionsabhängiges Signal zu erzeugen, wobei vor dem Empfänger ein Polarisationsfilter angeordnet ist und wobei sich der Empfänger und der Polarisator in Abhängigkeit von der relativen Position der beiden Objekte relativ zueinander bewegen, zeichnet sich dadurch aus, dass der Polarisator wenigstens zwei verschiedene Polarisationsrichtungen aufweist. Bei einer Drehung eines derartigen Polarisators um 360° ergibt sich somit ein absolutes sinusförmiges Winkelsignal mit einer Periode pro Umdrehung beziehungsweise bei Bewegung entlang einer Achse ein entsprechend moduliertes Signal. Dadurch wird es ermöglicht, ohne zusätzliche Detektoren oder Auswertealgorithmen zusätzliche Information bei der Messung der relativen Position zweier relativ zueinander bewegbarer Objekte bereitzustellen. Die Anordnung des Polarisationsfilters vor dem Empfänger bedeutet insbesondere, dass er direkt davor angeordnet ist und keine weiteren Bauteile zwischen dem Polarisationsfilter und dem Empfänger angeordnet sind. Der Sender, der unpolarisiertes Licht aussendet, kann beispielsweise durch eine unpolarisierte Lichtquelle wie beispielsweise eine Glühlampe oder auch durch eine polarisierte Lichtquelle wie beispielsweise eine Laserdiode mit vorgelagerter Streuscheibe realisiert werden.

Vorteilhafterweise sendet der Sender einen divergenten Lichtkegel aus, um den Polarisator flächig zu beleuchten.

In einer vorteilhaften Ausgestaltung der Erfindung ist die optische Achse des Senders parallel zur Drehachse und fällt nicht mit dieser zusammen, um die unsymmetrische Ausgestaltung des Polarisators basierend auf den wenigstens zwei unterschiedlichen Polarisationsrichtungen geeignet beleuchten und detektieren zu können.

Gemäß einer bevorzugten Ausführungsform der Erfindung weist der Polarisator eine Vielzahl von unterschiedlichen Polarisationsrichtungen auf, vorzugsweise wenigstens 16 unterschiedliche Polarisationsrichtungen.

Gemäß einer besonders bevorzugten Ausgestaltung der Erfindung weist der Polarisator wenigstens zwei Bereiche mit unterschiedlichen Polarisationsrichtungen auf, welche aneinander grenzen und vorzugsweise ineinander verzahnt ausgebildet sind. Die Diskontinuitäten der von den unterschiedlichen Bereichen mit unterschiedlichen Polarisationsrichtungen reflektierten oder transmittierten Lichtintensität können durch eine Verzahnung abgemildert oder vermieden werden.

Gemäß einer besonders vorteilhaften Ausgestaltung ändert sich die Polarisationsrichtung entlang eines Pfads auf dem Polarisator kontinuierlich. Dadurch können Diskontinuitäten in der Lichtintensität vollständig vermieden werden.

Der Pfad verläuft vorzugsweise parallel zur Bewegungsrichtung der Relativbewegung der beiden Objekte. Insbesondere entspricht der Pfad dem Weg des bei Bewegung zwischen dem Polarisator und dem Empfänger auf dem Polarisator von dem Sender erzeugten Lichtflecks oder ist dazu parallel.

Gemäß einer bevorzugten Ausführungsform entspricht der Pfad dem Weg des Lichtflecks auf dem Polarisator bei Relativbewegung der beiden Objekte oder des Polarisators und des Senders. Vorzugsweise ist der Polarisator als Scheibe oder als Stab ausgebildet. Eine Scheibe wird insbesondere in Vorrichtungen zur Messung des Drehwinkels zweier relativ zueinander um eine Drehachse rotierender Objekte verwendet, während ein Stab insbesondere in Vorrichtungen zur Messung der relativen Position zweier relativ zueinander entlang einer Achse bewegbarer Objekte zur Anwendung kommt. Dabei wird als Stab ein zylindrisches Element mit einer Querschnittsfläche, welche zwei zueinander parallele Kanten aufweist, angesehen, sodass unter einem Stab beispielsweise auch ein Streifen oder eine Folie zu verstehen ist.

Vorzugsweise ist der Polarisator auf einer Fläche angeordnet, welche eben oder gekrümmt ausgebildet ist.

Vorteilhafterweise ist bei Ausbildung des Polarisators als Scheibe der Pfad als eine Kreisbahn um die durch die Scheibe verlaufende Drehachse ausgebildet und bei Ausbildung des Polarisators als Stab der Pfad als eine kürzeste Verbindungslinie zwischen zwei Punkten der beiden gegenüberliegenden Enden des Stabs ausgebildet. Auf dem Stab ist insbesondere der Pfad eine Gerade auf einer der beiden parallelen Seitenflächen, welche von einem Ende des Stabs zum anderen reicht.

Vorzugsweise sind wenigstens zwei Empfänger vorgesehen, vor welchen jeweils ein Polarisationsfilter angeordnet ist, wobei die wenigstens zwei Polarisationsfilter unterschiedliche Polarisationsrichtungen aufweisen, um phasenversetzte Signale generieren und redundante Signale bereitstellen zu können.

Eine vorteilhafte Ausgestaltung der Erfindung sieht vor, dass der Empfänger tangential zur Richtung der Relativbewegung der beiden Objekte eine größere Länge aufweist als senkrecht zur Richtung der Relativbewegung. Dies ermöglicht die Abschwächung oder Vermeidung von Diskontinuitäten im detektierten Signal, da insbesondere in Verbindung mit einer flächigen Beleuchtung des Polarisators der Detektor nicht nur die Polarisationsrichtung der Beleuchtungsachse, sondern anteilig auch benachbarten Polarisationsrichtungen sieht, was zur Mischung der detektierten Polarisationsrichtungen auf der Detektorfläche führt, was wiederum zu einer anteiligen Mischung der detektieren Intensitäten führt. Auf diese Weise können die Stufeneffekte in den einzelnen sinusförmige Signale durch optische oder räumliche Interpolation vermieden werden.

Erfindungsgemäß ist die Länge des Empfängers tangential zur Richtung der Relativbewegung abhängig von der Geschwindigkeit, mit weicher sich der vom Empfänger gesehene Bereich des Polarisators relativ zum Empfänger bewegt. Dies ist insbesondere bei sich drehenden Polarisatoren von Vorteil, damit ein weiter von der Drehachse entfernt liegender Detektor denselben winkehlbereich wie ein näher an der Drehachse liegender Empfänger sieht und somit Licht von gleicher. Winkelabschnitten des Polarisators detektiert. Insbesondere nimmt daher die Länge des Empfängers mit zunehmendem Abstand zur Drehachse zu.

Vorzugsweise weist der Empfänger eine ringsegmentförmige Fläche auf. Idealerweise entspricht die ringsegmentförmige Fläche des Empfängers der Projektion des von dem Sender beleuchteten Bereichs auf den Empfänger.

Um die Vergleichbarkeit der detektierten Signale bei verschiedenen Empfängern zu gewährleisten, weisen vorzugsweise alle Empfänger eine gleich große Fläche auf.

Die Erfindung wird anhand der folgenden Figuren ausführlich erläutert. Es zeigen:
- Figur 1: eine schematische Darstellung einer Vorrichtung zur Messung des Drehwinkels zweier relativ zueinander um eine Drehachse rotierender Objekte gemäß eines ersten Ausführungsbeispiels in reflexivem Aufbau mit dem Sender parallel versetzt zur Drehachse, wobei Sender und Empfänger die gleiche optische Achse aufweisen,
- Figur 2: eine schematische Darstellung einer Vorrichtung zur Messung des Drehwinkels zweier relativ zueinander um eine Drehachse rotierender Objekte gemäß eines zweiten Ausführungsbeispiels in reflexivem Aufbau mit dem Sender parallel versetzt zur Drehachse, wobei Sender und Empfänger eine unterschiedliche optische Achse aufweisen,
- Figur 3: eine schematische Darstellung einer Vorrichtung zur Messung des Drehwinkels zweier relativ zueinander um eine Drehachse rotierender Objekte gemäß eines dritten Ausführungsbeispiels in transmissivem Aufbau mit dem Sender parallel versetzt zur Drehachse, wobei Sender und Empfänger die gleiche optische Achse aufweisen,
- Figur 4: eine schematische Darstellung einer Vorrichtung zur Messung des Drehwinkels zweier relativ zueinander um eine Drehachse rotierender Objekte gemäß eines vierten Ausführungsbeispiels in reflexivem Aufbau, wobei Sender und Empfänger eine unterschiedliche optische Achse aufweisen und die optische Achse mit der Drehachse zusammenfällt,
- Figur 5: eine schematische Darstellung einer Vorrichtung zur Messung des Drehwinkels zweier relativ zueinander um eine Drehachse rotierender Objekte gemäß eines fünften Ausführungsbeispiels der Erfindung, in reflexivem Aufbau, wobei Sender und Empfänger eine unterschiedliche optische Achse aufweisen, welche jeweils quer zur Drehachse verlaufen,
- Figur 6: eine schematische Darstellung eines Polarisators gemäß einem ersten Ausführungsbeispiel mit mehreren, insbesondere sechzehn, segmentförmigen Bereichen mit unterschiedlicher Polarisationsrichtung zur Verwendung in einer Vorrichtung gemäß einer der Figuren 1 bis 5,
- Figur 7a: eine schematische Darstellung eines Polarisators gemäß einem zweiten Ausführungsbeispiel mit verzahnten aneinandergrenzenden Bereichen zur Verwendung in einer Vorrichtung gemäß einer der Figuren 1 bis 5,
- Figur 7b: eine Ausschnittsvergrößerung aus Figur 7a,
- Figur 8a: eine schematische Darstellung einer Empfängeranordnung gemäß einem ersten Ausführungsbeispiel mit zwei Empfängern, welche unterschiedliche Polarisationsrichtung aufweisen, zur Verwendung in einer Vorrichtung gemäß einer der Figuren 1 bis 5,
- Figur 8b: eine schematische Darstellung einer Empfängeranordnung gemäß einem zweiten Ausführungsbeispiel mit wenigstens vier Empfängern, welche zwei verschiedene Polarisationsrichtung aufweisen, zur Verwendung in einer Vorrichtung gemäß einer der Figuren 1 bis 5,
- Figur 8c: eine schematische Darstellung einer Empfängeranordnung gemäß einem dritten Ausführungsbeispiel mit vier Empfängern, welche vier unterschiedliche Polarisationsrichtungen aufweisen, zur Verwendung in einer Vorrichtung gemäß einer der Figuren 1 bis 5,
- Figur 8d: eine schematische Darstellung einer Empfängeranordnung gemäß einem vierten Ausführungsbeispiel mit wenigstens acht Empfängern, welche vier verschiedene Polarisationsrichtungen aufweisen, zur Verwendung in einer Vorrichtung gemäß einer der Figuren 1 bis 5,
- Figur 8e: eine schematische Darstellung einer Empfängeranordnung gemäß einem fünften Ausführungsbeispiel mit wenigstens fünf Empfängern, welche unterschiedliche Länge aufweisen, zur Verwendung in einer Vorrichtung gemäß einer der Figuren 1 bis 5,
- Figur 8f: eine schematische Darstellung einer Empfängeranordnung gemäß einem sechsten Ausführungsbeispiel mit wenigstens fünf Empfängern, welche unterschiedliche Länge und unterschiedliche Breite, aber gleiche Fläche aufweisen, zur Verwendung in einer Vorrichtung gemäß einer der Figuren 1 bis 5,
- Figur 9a: eine schematische Darstellung einer Empfängeranordnung gemäß einem siebten Ausführungsbeispiel mit mehreren Empfängern mit unterschiedlichen Polarisationsrichtungen in Längsrichtung und Querrichtung zur Verwendung in einer Vorrichtung gemäß einer der Figuren 1 bis 5,
- Figur 9b: eine schematische Darstellung einer Empfängeranordnung gemäß einem achten Ausführungsbeispiel mit mehreren Empfängern mit unterschiedlichen Polarisationsrichtungen in Längsrichtung und Querrichtung zur Verwendung in einer Vorrichtung gemäß einer der Figuren 1 bis 5,
- Figur 10a: eine schematische Darstellung einer Empfängeranordnung gemäß einem neunten Ausführungsbeispiel mit wenigstens vier ringsegmentförmigen Empfängern zur Verwendung in einer Vorrichtung gemäß einer der Figuren 1 bis 5,
- Figur 10b: eine schematische Darstellung einer Empfängeranordnung einem zehnten Ausführungsbeispiel mit wenigstens vier ringsegmentförmigen Empfängern zur Verwendung in einer Vorrichtung gemäß einer der Figuren 1 bis 5 gemäß und
- Figur 10c: eine schematische Darstellung einer Empfängeranordnung gemäß einem elften Ausführungsbeispiel mit wenigstens vier ringsegmentförmigen Empfängern mit unterschiedlicher Breite zur Verwendung in einer Vorrichtung gemäß einer der Figuren 1 bis 5.

In den Figuren bezeichnen gleiche Bezugszeichen gleiche oder funktionsgleiche Teile.

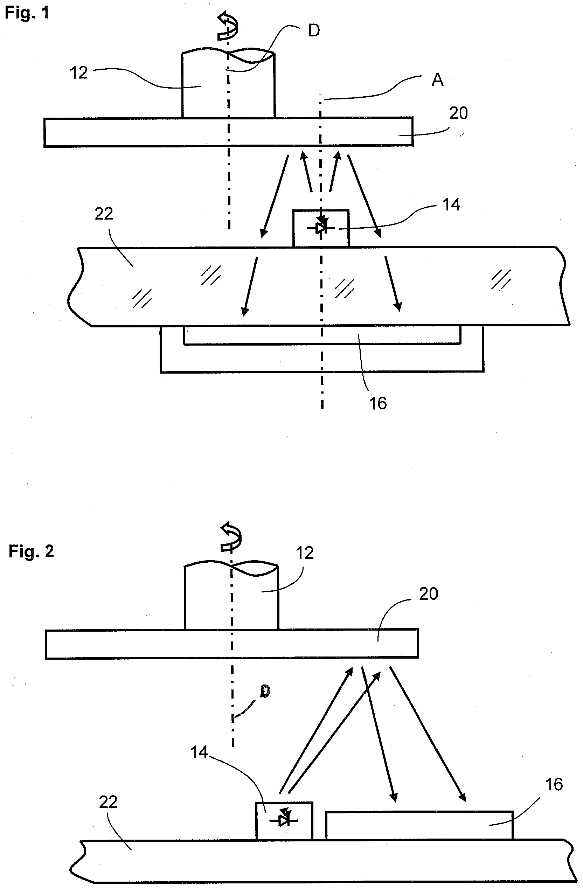

Figur 1 zeigt eine schematische Darstellung einer Vorrichtung 10 zur Messung des Drehwinkels der relativ zueinander um eine Drehachse D rotierenden Objekte, insbesondere die Drehung einer Welle 12 um die Drehachse D relativ zu einem feststehenden Objekt. An der Welle 12 ist ein Polarisator 20 drehfest angeordnet. Der Polarisator 20 ist insbesondere als Scheibe ausgebildet, beispielsweise als Kreisscheibe, und weist eine Normale auf, die parallel zur Drehachse D ausgerichtet ist und insbesondere mit dieser zusammenfällt.

Der Polarisator 20 wird mit einem Sender 14, insbesondere einer Lichtquelle, beleuchtet. Der Sender 14 weist eine optische Achse A auf, welche bei der Vorrichtung 10 gemäß dem in Figur 1 dargestellten Ausführungsbeispiel parallel zur Drehachse D ist, aber nicht mit dieser zusammenfällt. Der Sender 14 ist als unpolarisierte Lichtquelle, beispielsweise als LED, ausgebildet, kann jedoch auch als eine Glühlampe oder Ähnliches ausgebildet sein. Der Sender 14 sendet vorzugsweise einen divergenten Lichtkegel aus, um den Polarisator 14 großflächig zu beleuchten. Vorzugsweise ist der Lichtkegel des Senders 14 homogen. Das Intensitätsprofil des Senders 14 ist vorzugsweise rotationssymmetrisch, beispielsweise mit einer Lambert- oder Gaussverteilung und hat vorzugsweise ihren Intensitätsschwerpunkt auf der optischen Achse A.

Die Beleuchtung durch den Sender 14 kann kollimiert oder in Teilen konvergent ausgeführt sein. Eine Strahlformung des Senders 14 ist nicht zwingend notwendig. Je nach Ausführungsform kann jedoch für den Sender 14 eine Spiegeloptik, eine refraktive oder defraktive Linse oder eine Kombination daraus verwendet werden, wobei vorteilhafterweise die Strahlformung möglichst wenig polarisierend wirkt.

Bei der in Figur 1 dargestellten Vorrichtung 10 ist der Sender 14 auf einem Träger 22 angeordnet, welcher transparent ausgebildet ist. Der Sender 14 ist auf der dem Polarisator 20 zugewandten Seite des Trägers 22 angeordnet. Auf der dem Polarisator 20 abgewandten Seite des Trägers 22 ist ein Empfänger 16, welcher beispielsweise als Detektorchip ausgebildet sein kann, angeordnet. Die Ebenen des Senders 14 und die Ebenen des Empfängers 14 sind somit bei dieser Ausführungsform parallel gegeneinander versetzt. Alternativ können die Ebenen des Senders 14 und die Ebenen des Empfängers 16 auch zusammenfallen. Bei der vorliegenden Ausführungsform fällt die optische Achse A des Senders 14 mit der optischen Achse des Empfängers 16 zusammen. Ein derartiger symmetrischer Aufbau vereinfacht die Auswertung, ist jedoch nicht zwingend erforderlich.

Das Licht des Senders 14 wird durch den Polarisator 20 polarisiert und reflektiert, sodass es auf den Empfänger 16 fällt. Ausführungsbeispiele des Polarisators 20 und des Empfängers 16 werden nachfolgend beschrieben.

Figur 2 zeigt eine schematische Darstellung eines weiteren Ausführungsbeispiels einer Vorrichtung 10, welche sich von der in Figur 1 dargestellten Vorrichtung dadurch unterscheidet, das der Sender 14 und der Empfänger 16 auf einer Seite des Trägers 22 angeordnet sind, insbesondere auf der dem Polarisator 20 zugewandten Seite des Trägers 22. Der Träger 22 muss daher nicht transparent ausgeführt sein und kann insbesondere durch eine Leiterplatte gebildet werden. In diesem Ausführungsbeispiel fallen die optische Achse des Senders 14 und die optische Achse des Empfängers 14 nicht zusammen.

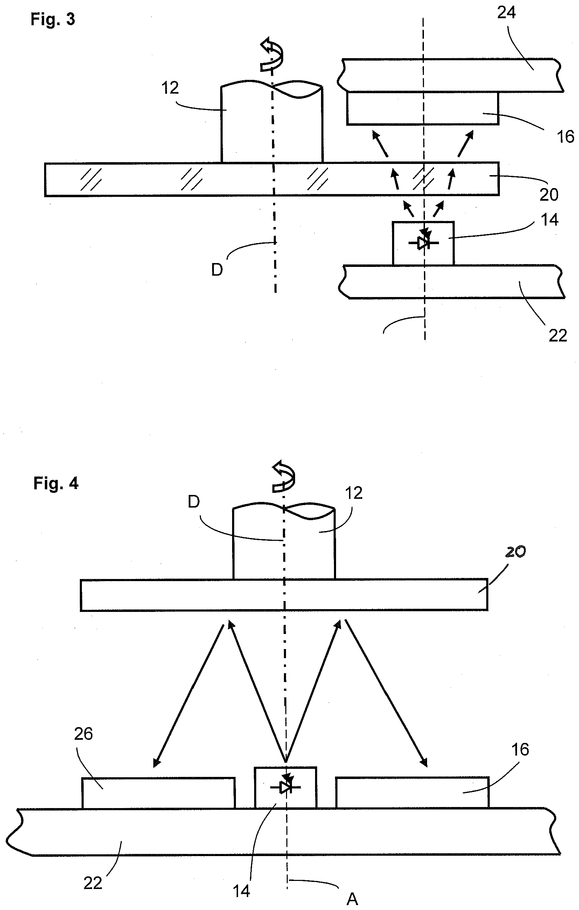

Figur 3 zeigt eine schematische Darstellung eines weiteren Ausführungsbeispiels einer Vorrichtung 10, welche sich von der in Figur 1 dargestellten Vorrichtung dadurch unterscheidet, dass der Sender 14 und der Empfänger 16 auf zwei verschiedenen Seiten des Polarisators 20 angeordnet sind. Der Sender 14 kann dabei auf einem Träger 22, welcher insbesondere als Leiterplatte ausgebildet sein kann, angeordnet sein, während der Empfänger 16 auf einem weiteren Träger 24, welcher insbesondere als Leiterplatte ausgebildet sein kann, angeordnet sein kann. Die optische Achse A des Senders 14 ist parallel zur Drehachse D der Welle 12 angeordnet. In dieser Ausführungsform fällt die optische Achse des Empfängers 16 mit der optischen Achse A des Senders 14 zusammen. In dieser Ausführungsform ist der Polarisator 14 transmittierend ausgebildet.

Figur 4 zeigt eine schematische Darstellung eines weiteren Ausführungsbeispiels einer Vorrichtung 10, bei welcher die optische Achse A des Senders 14 mit der Drehachse D zusammenfällt. Der Sender 14 ist auf dem Träger 22 angeordnet. Zusätzlich zu dem Empfänger 16 ist ein weiterer Empfänger 26 auf dem Träger 22 angeordnet, wobei sich vorzugsweise ein symmetrischer Aufbau ergibt. Ein derartiger Aufbau der Vorrichtung 10 kann Winkelfehler durch eine Exzentrizität des Polarisators 20 vermeiden.

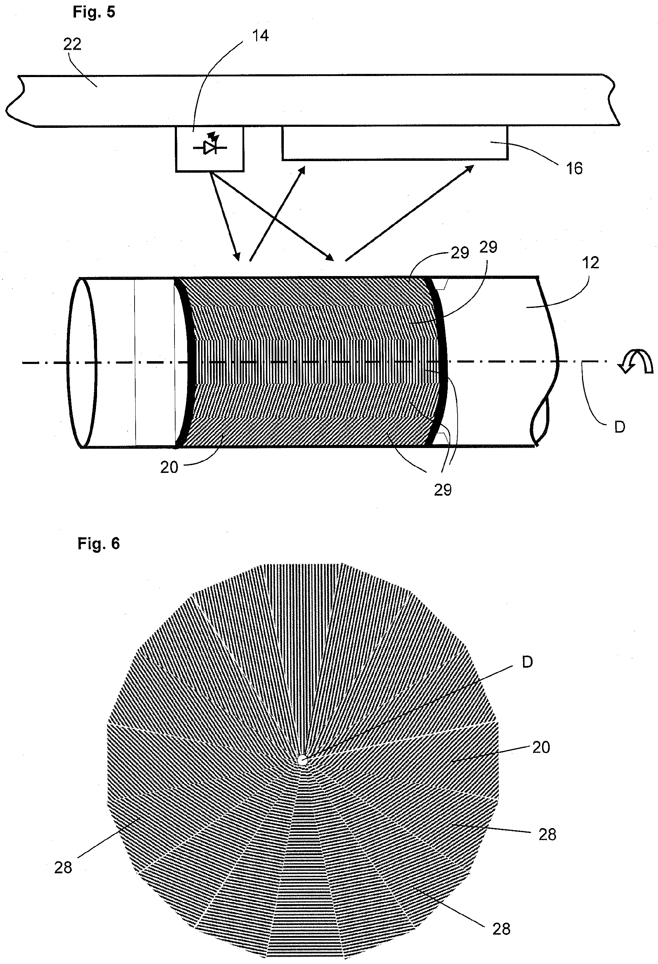

Figur 5 zeigt ein weiteres Ausführungsbeispiel einer Vorrichtung 10, welche sich von den Ausführungsbeispielen gemäß der Figuren 1 bis 4 dadurch unterscheidet, dass der Polarisator 20 nicht als Scheibe ausgebildet ist, sondern als Streifen oder Folie um den Außenumfang der Welle 12 gewickelt ist. Die Beleuchtung des Polarisators 20 durch den Sender 14 erfolgt seitlich. Dabei ist insbesondere die optische Achse A des Senders 14 quer zur Drehachse D angeordnet. Der Träger 22 ist dabei im Wesentlichen parallel zur Drehachse D angeordnet. Auf dem Träger 22 ist der Empfänger 16 angeordnet. Der Träger 22 kann als Leiterplatte ausgebildet sein.

Grundsätzlich können verschiedene Ausgestaltungen des Senders 14, des Empfängers 16 und des Polarisators 20 aus den verschiedenen Ausführungsbeispielen miteinander kombiniert werden.

Der Polarisator 20 ist in den Ausführungsbeispielen gemäß den Figuren 1, 2, 4 und 5 reflektierend ausgebildet und kann insbesondere spiegel-reflektierend oder diffus-reflektierend ausgelegt sein. Im Ausführungsbeispiel gemäß Figur 3 ist der Polarisator transmittierend ausgebildet.

Grundsätzlich denkbar ist auch ein Polarisator 20 in Form eines Stabs, wobei unter einem Stab ein zylindrisches Element mit einer Querschnittsfläche, welche zwei parallele Seitenkanten enthält, zu verstehen ist, beispielsweise eine Folie oder ein Streifen. In dem Ausführungsbeispiel gemäß Figur 5 ist der Stab um die Welle 12 gewickelt. Der Stab kann auch eben ausgebildet sein und zur Bestimmung der relativen Position zweier relativ zueinander entlang einer Achse bewegbarer Objekte dienen.

Figur 6 zeigt ein Ausführungsbeispiel des Polarisators 20, welcher als Scheibe ausgebildet ist. Insbesondere wird der Polarisator 20 an der Welle 12 montiert und dreht sich mit der Welle 12 um die Drehachse D. Der Polarisator 20 weist mehrere verschiedene Polarisationsrichtungen auf. Bei der vorliegenden Ausführungsform sind die verschiedenen Polarisationsrichtungen in mehreren Bereichen 28 angeordnet. Die Bereiche 28 sind vorliegend etwa dreieckig, insbesondere etwa als gleichschenklige Dreiecke, ausgebildet und aneinander angrenzend, insbesondere an den Schenkeln aneinander angrenzend, angeordnet, wobei sie die Scheibe vollständig überdecken. Die Außenkontur der Scheibe ist dabei ein Vieleck. Denkbar wäre selbstverständlich auch eine runde Scheibe mit kreissegmentförmigen Bereichen 28. Weiterhin sind beliebige Anordnungen der Bereiche 28 auf der Scheibe denkbar, welche insbesondere auch lediglich eine teilweise Überdeckung darstellen können.

Bei dem vorliegenden Ausführungsbeispiel weist der Polarisator 20 sechzehn unterschiedliche Polarisationsrichtungen auf. In dem vorliegenden Ausführungsbeispiel können dies die Polarisationsrichtungen von 0° bis 168,75° in 11, 25°-Schritten sein. Selbstverständlich ist es auch möglich, in unterschiedlichen Bereichen 28 gleiche Polarisationsrichtungen anzuordnen, so lange wenigstens zwei verschiedene Polarisationsrichtungen auf dem Polarisator 20 vorhanden sind. Die Bereiche 28 sind in einer Ausführungsform derart angeordnet, dass ihre Polarisationswinkel idealerweise in aufsteigender Reihenfolge über den Umfang der Scheibe positioniert sind.

Gemäß einer bevorzugten Ausführungsform der Erfindung ändert sich die Polarisationsrichtung entlang eines Pfads auf dem Polarisator 20 kontinuierlich. In einer Ausführungsform können beispielsweise die Bereiche 28 bei dem in Figur 6 dargestellten Ausführungsbeispiel in Umfangsrichtung infinitesimal schmal ausgebildet werden, so dass sich eine stetige Änderung der Polarisationsrichtung zwischen zwei aneinandergrenzenden Bereichen 28 ergibt und sich somit insbesondere die Polarisationsrichtung entlang eines Pfads auf dem Polarisator 20, welcher beispielsweise eine Kreisbahn um die Drehachse D auf dem Polarisator 20 darstellt, kontinuierlich ändert.

Insbesondere erfolgt die Änderung in der Polarisationsrichtung entlang eines Pfads, der parallel zur Bewegungsrichtung der Relativbewegung der beiden Objekte verläuft. Der Pfad ist insbesondere der Weg, den das von dem Sender 14 ausgesandte Licht auf dem Polarisator 20 bei Drehung des Polarisators 20 um die Drehachse D zurücklegt. Entlang dieses Wegs ist eine kontinuierliche Änderung der Polarisationsrichtung wünschenswert, um Unstetigkeiten in der detektierten Lichtintensität zu vermeiden.

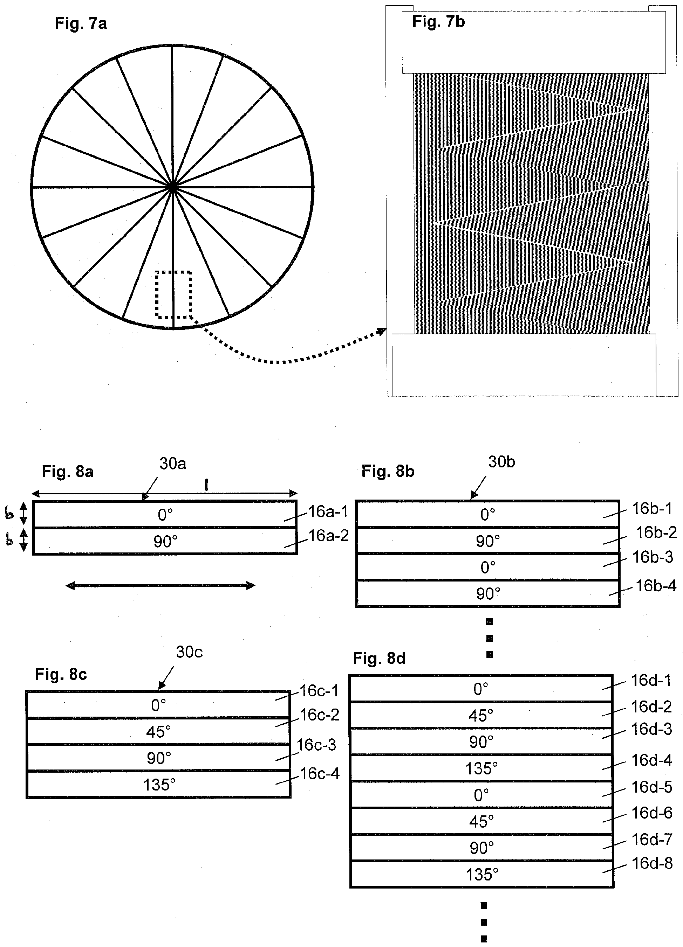

In den Figuren 7a und 7b ist ein weiteres Ausführungsbeispiel des Polarisators 20 dargestellt, welcher sich von dem in Figur 6 dargestellten Polarisator dadurch unterscheidet, dass Unstetigkeiten in der Lichtintensität beim Übergang zwischen zwei benachbarten Bereichen 28 des Polarisators 20 dadurch abgemildert werden, dass die aneinandergrenzenden Bereiche 28, welche im Ausführungsbeispiel gemäß Figur 6 entlang eines Radius aneinandergrenzen, im Ausführungsbeispiel gemäß Figur 7 ineinander verzahnt aneinandergrenzen. Die Zähne sind beispielsweise dreieckig ausgebildet. Dadurch ergibt sich ein quasi kontinuierlicher Übergang zwischen zwei benachbarten Bereichen 28, welcher insbesondere bei einer flächigen Beleuchtung des Polarisators 20 zu einem quasi kontinuierlichen Übergang der detektierten Lichtintensitäten führt.

Eine alternative Ausgestaltung des Polarisators 20 nicht als Scheibe sondern als Stab mit unterschiedlichen Polarisationsrichtungen, insbesondere als Streifen oder Folie, zeigt Figur 5. Der Polarisator 20 weist rechteckige Abschnitte 29 auf, welche insbesondere mit ihrer Längskante aneinander angrenzend angeordnet sind, wobei benachbarte Bereiche 29 unterschiedliche Polarisationsrichtungen aufweisen. Vorzugsweise sind über den Umfang verteilt gleiche Polarisationsrichtungen gleich häufig vorhanden. Vorzugsweise beträgt die Differenz im Winkel der Polarisationsrichtungen zwischen zwei benachbarten Bereichen 29 180°/n, wobei n die Anzahl der Bereiche 29 ist. Auch die Abschnitte 29 können in einer nicht dargestellten Ausführungsform ineinander verzahnt ausgebildet sein.

In einer nicht dargestellten Ausführungsform kann der Polarisator 20 gemäß Figur 5 nicht um die Welle 12 gewickelt, sondern eben auf einem Träger angeordnet sein und zur Bestimmung der relativen Position zweier relativ zueinander entlang einer Achse bewegbaren Objekte dienen.

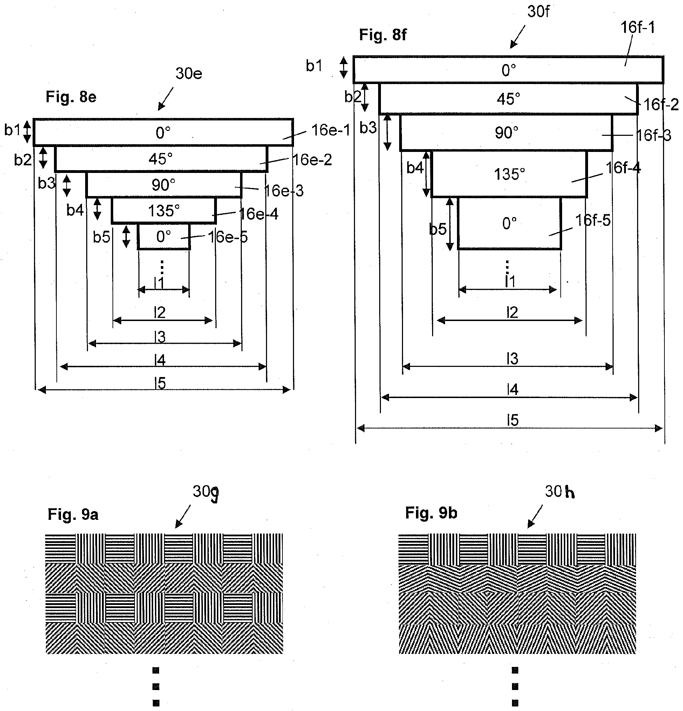

Die Figuren 8 bis 10 zeigen verschiedene Ausgestaltungen von Empfängeranordnungen 30. Grundsätzlich ist ein einziger Empfänger 16, vor welchem ein Polarisationsfilter angeordnet ist, zur Funktionsweise der Vorrichtung 10 ausreichend. Mehrere Empfänger 16 können redundante Signale bereitstellen und verbessern die Winkelauflösung. Anstelle des Empfängers 16,26 in den Figuren 1 bis 5 kann eine der nachfolgend beschriebenen Empfängeranordnungen 30 oder eine ähnliche Empfängeranordnung verwendet werden.

Figur 8a zeigt ein Ausführungsbeispiel einer Empfängeranordnung 30a, welche einen ersten Empfänger 16a-1 und einen zweiten Empfänger 16-2 aufweist. Die beiden Empfänger 16a-1 und 16a-2 weisen unterschiedliche Polarisationsrichtungen auf, beispielsweise um 90° gegeneinander verdreht. Jeder der Empfänger 16a-1, 16a-2 weist eine Länge 1 und eine Breite b auf, wobei die Länge 1 und die Breite b für beide Empfänger 16a-1, 16a-2 identisch ist und die beiden Empfänger 16a-1 und 16a-2 somit identische Flächen aufweisen. Die Länge 1 ist dabei deutlich größer als die Breite b. Die Länge 1 ist tangential zur Richtung der Relativbewegung der beiden Objekte oder parallel versetzt dazu ausgerichtet. Dadurch, dass die Länge 1 größer ist als die Breite b, insbesondere die Länge 1 tangential zur Richtung der Relativbewegung der beiden Objekte, kann von jedem der Empfänger 16a-1 und 16a-2 ein größerer Bereich des Polarisators 20 detektiert werden, was bei entsprechender Ausgestaltung des Polarisators 20 zu einer Mischung der detektierten Polarisationsrichtungen führt, was wiederum zu einer anteiligen Mischung der detektierten Intensitäten führt. Dadurch können Diskontinuitäten in den detektierten Lichtintensitäten vermieden werden. Die Verwendung von mehr als einem Empfänger, beispielsweise von zwei Empfängern 16a-1, 16a-2 ermöglicht die Detektion phasenversetzter Signale und dadurch eine bessere Winkelauflösung.

Figur 8b zeigt eine Empfängeranordnung 30b mit wenigstens vier Empfängern 16b-1, 16b-2, 16b-3, 16b-4, welche jeweils eine Länge 1 und eine Breite b aufweisen, die jeweils identisch sind, so dass jeder der Empfänger 16b-1, 16b-2, 16b-3, 16b-4 eine identische Fläche aufweist. Jeweils zwei der Empfänger 16b-1, 16b-3 bzw. 16b-2, 16b-4 weisen gleiche Polarisationsrichtungen auf. Die Polarisationsrichtungen der Empfänger 16b-2, 16b-4 sind um 90° gegen die Polarisationsrichtung der Empfänger 16b-1, 16b-3 versetzt angeordnet. In Figur 8b ist angedeutet, dass grundsätzlich weitere Empfänger in der Empfängeranordnung 30b vorhanden sein können, die vergleichbar zu den Empfängern 16b-1, 16b-2 aufgebaut sind.

Figur 8c zeigt eine Empfängeranordnung 30c mit vier Empfängern 16c-1, 16c-2, 16c-3, 16c-4, welche jeweils identische Flächen aufweisen und jeweils gleiche Länge 1 und gleiche Breite b aufweisen, die jedoch jeweils unterschiedliche Polarisationsrichtungen aufweisen, insbesondere die Polarisationsrichtungen 0°, 45°, 90° und 135°.

Figur 8d zeigt ein weiteres Ausführungsbeispiel einer Empfängeranordnung 30d mit wenigstens acht Empfängern 16d-1 16d-2, 16d-3, 16d-4, 16d-5, 16d-6, 16d-7, 16d-8, welche jeweils gleiche Länge 1 und gleiche Breite b und somit gleiche Fläche aufweisen. Beispielsweise sind insgesamt vier verschiedene Polarisationsrichtungen, nämlich die Polarisationsrichtungen 0°, 45°, 90° und 135° vorhanden, wobei jeweils zwei Empfänger 16d-1, 16d-5; 16d-2, 16d-6; 16d-3, 16d-7; 16d-4, 16d-8 identische Polarisationsrichtungen aufweisen. Auch bei dieser Empfängeranordnung 30d sind grundsätzlich weitere Empfänger möglich, die vergleichbar zu den Empfängern 16d-1 bis 16d-4 ausgebildet sind.

Insbesondere bei sich drehenden Polarisatoren 20 ist es von Vorteil, wenn die Geometrie der Flächen der Empfänger an die Geometrie des Polarisators 20 und insbesondere der Bereiche 28 angepasst werden und vorzugsweise berücksichtigen, dass weiter außen auf den sich drehenden Polarisator 20 angeordnete Bereiche sich schneller bewegen als weiter innenliegende Bereiche. Insbesondere sollte berücksichtigt werden, dass bei identischer Länge 1 tangential zur Richtung der Relativbewegung der Objekte für sämtliche radial nebeneinander angeordneten Empfänger eine Verfälschung der Intensitäten auftreten kann, da über unterschiedlich viele Bereiche 28 mit unterschiedlichen Polarisationsrichtungen gemittelt wird. Um dies zu berücksichtigen, ist die Empfängeranordnung 30e vorgesehen, welche mindestens fünf Empfänger 16e-1 16e-2, 16e-3, 16e-4, 16e-5 aufweist, welche jeweils eine Länge 11, 12, 13, 14, 15 und eine Breite b1, b2, b3, b4, b5 aufweisen, wobei die Länge 11, 12, 13, 14, 15 der Empfänger 16e-1, 16e-2, 16e-3, 16e-4, 16e-5 abhängig ist von der Geschwindigkeit, mit welcher sich der vom jeweiligen Empfänger 16e-1, 16e-2, 16e-3, 16e-4, 16e-5 gesehene Bereich des Polarisators 20 relativ zu dem entsprechenden Empfänger 16e-1, 16e-2, 16e-3, 16e-4, 16e-5 bewegt. Insbesondere ist die Länge 11 des Empfängers 16e-1, welcher auf dem Polarisator 20 projiziert gesehen weiter entfernt von der Drehachse D liegt, größer als die Länge 15 des bei Projektion auf den Polarisator 20 näher an der Drehachse D liegenden Empfängers 16e-5.

In der in Figur 8e dargestellten Ausführungsform der Empfängeranordnung 30e sind die Breiten b1 bis b5 identisch ausgebildet. Dadurch können Verfälschungen der detektierten Intensitäten auftreten, so dass bei einer in Figur 8f dargestellten Empfängeranordnung 30f, welche ansonsten zu der Empfängeranordnung 30e vergleichbar ausgebildet ist, die Breiten b1, b2, b3, b3, b5 von Empfängern 16f-1, 16f-2, 16f-3, 16f-4, 16f-5 derart ausgebildet sind, dass die Empfänger 16f-1, 16f-2, 16f-3, 16f-4, 16f-5 jeweils gleich große Flächen aufweisen.

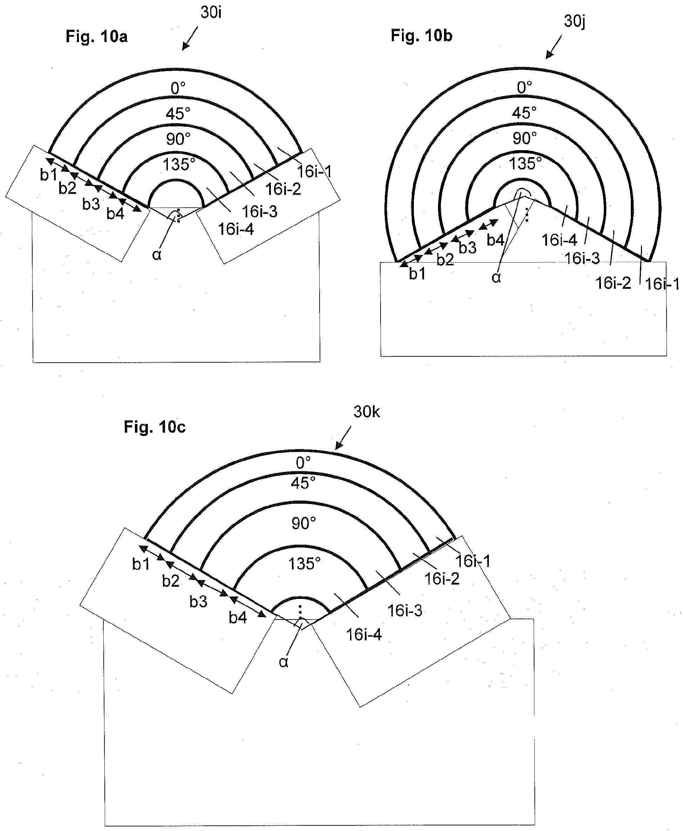

Eine verbesserte Anpassung der Geometrie der Empfänger an die Geometrie des Polarisators 20 bei Bestimmung des Drehwinkels zweier relativ zueinander um die Drehachse D rotierende Objekte kann erfolgen, wenn die Empfänger 16 nicht als Rechtecke, wie bei den in den Figuren 8a bis 8f dargestellten Ausführungsbeispielen, sondern als Ringsegmente, wie in den Figuren 10a bis 10c dargestellt, ausgeführt sind.

Die Figur 10a zeigt eine Empfängeranordnung 30i mit vier ringsegmentförmigen Empfängern 16i-1, 16i-2, 16i-3, 16i-4, welche jeweils unterschiedliche Polarisationsrichtung, beispielsweise 0°, 45°, 90°, 135° aufweisen, welche jeweils gleiche Breite b1, b2, b3, b4 aufweisen und jeweils einen identischen Winkel α überstreichen.

Dabei ist es, wie bei dem in Figur 10e dargestellten Ausführungsbeispiel einer Empfängeranordnung 30j mit Empfängern 16j-1, 16j-2, 16j-3, 16j-4, welche jeweils gleiche Breite b1, b2, b3, b4 aufweisen, möglich, dass α größer als 180° ausgebildet ist.

Das in Figur 10c dargestellte Ausführungsbeispiel einer Empfängeranordnung 30k mit Empfängern 16k-1, 16k-2, 16k-3, 16k-4 unterscheidet sich von dem in Figur 10 dargestellten Ausführungsbeispiel dadurch, dass durch Variation der Breiten b1, b2, b3, b4 die Empfänger 16k-1, 16k-2, 16k-3, 16k-4 alle eine gleich große Fläche aufweisen.

Die Figuren 9a und 9b zeigen weitere Ausführungsbeispiele von Empfängeranordnungen 30g, 30h, welche verdeutlichen, dass grundsätzlich eine Variation der Richtungen der Polarisationsfilter vor den Empfängern auch in Richtung der Länge 1 möglich ist.

### Bezugszeichenliste

- 10: Vorrichtung
- 12: Welle
- 14: Sender
- 16: Empfänger
- 20: Polarisator
- 22: Träger
- 24: Träger
- 26: Empfänger
- 28: Bereich
- 29: Bereich
- 30: Empfängeranordnung
- D: Drehachse
- A: optische Achse
- X: Bewegungsrichtung
- l: Länge
- b: Breite

## Patentansprüche

1. Vorrichtung zur Messung der relativen Position zweier relativ zueinander entlang einer Achse oder um eine Drehachse (D) bewegbarer Objekte mit einem Sender (12), der unpolarisiertes Licht bereitstellt, mit einem Polarisator (20), und mit wenigstens zwei radial nebeneinander angeordneten Empfängern (16), die die durch den Polarisator (20) durchtretende Lichtintensität messen, um ein positionsabhängiges Signal zu erzeugen, wobei vor den Empfängern (16) ein Polarisationsfilter angeordnet ist und wobei sich die Empfänger (16) und der Polarisator (20) in Abhängigkeit von der relativen Position der beiden Objekte relativ zueinander bewegen, wobei der Polarisator (20) wenigstens zwei verschiedene Polarisationsrichtungen aufweist,
**dadurch gekennzeichnet, dass** die Länge (l) der Empfänger (16) tangential zur Richtung (X) der Relativbewegung abhängig ist von der Geschwindigkeit, mit welcher sich der vom Empfänger (16) gesehene Bereich des Polarisators (20) relativ zum Empfänger (16) bewegt.

2. Vorrichtung nach Anspruch 1,
**dadurch gekennzeichnet, dass** der Sender (14) einen divergenten Lichtkegel aussendet.

3. Vorrichtung nach einem der vorhergehenden Ansprüche,
**dadurch gekennzeichnet, dass** die optische Achse des Senders (14) parallel zur Drehachse (D) angeordnet ist und nicht mit dieser zusammenfällt.

4. Vorrichtung nach einem der vorhergehenden Ansprüche,
**dadurch gekennzeichnet, dass** der Polarisator (20) eine Vielzahl von unterschiedlichen Polarisationsrichtungen aufweist, vorzugsweise wenigstens sechzehn unterschiedliche Polarisationsrichtungen.

5. Vorrichtung nach einem der vorhergehenden Ansprüche,
**dadurch gekennzeichnet, dass** der Polarisator (20) wenigstens zwei Bereiche (28, 29) mit unterschiedlichen Polarisationsrichtungen aufweist, welche aneinandergrenzen und vorzugsweise ineinander verzahnt ausgebildet sind.

6. Vorrichtung nach einem der vorhergehenden Ansprüche,
**dadurch gekennzeichnet, dass** der Polarisator (20) als Scheibe oder als Stab ausgebildet ist.

7. Vorrichtung nach einem der vorhergehenden Ansprüche,
**dadurch gekenntzeichnet,** dass der Polarisator (20) auf einer Fläche angeordnet ist, welche eben oder gekrümmt ausgebildet ist.

8. Vorrichtung nach Anspruch 6,
**dadurch gekennzeichnet, dass** die Ausbildung des Polarisators (20) als Scheibe der Pfad als eine Kreisbahn um die Drehachse (D) der Scheibe ausgebildet ist und bei Ausbildung des Polarisators (20) als Stab der Pfad als eine kürzeste Verbindungslinie zwischen zwei Punkten der beiden gegenüberliegenden Enden des Stabs ausgebildet ist.

9. Vorrichtung nach einem der vorhergehenden Ansprüche,
**dadurch gekennzeichnet, dass** vor den wenigstens zwei Empfängern (16) jeweils ein Polarisationsfilter angeordnet ist, wobei die wenigstens zwei Polarisationsfilter unterschiedliche Polarisationsrichtungen aufweisen.

10. Vorrichtung nach einem der vorhergehenden Ansprüche,
**dadurch gekennzeichnet, dass** der Empfänger (16) tangential zur Richtung der Relativbewegung der beiden Objekte eine größere Länge (1) aufweist als die Breite (b) senkrecht zur Richtung (X) der Relativbewegung.

11. Vorrichtung nach einem der vorhergehenden Ansprüche,
**dadurch gekennzeichnet, dass** der Empfänger (16) eine ringsegmentförmige Fläche aufweist.

12. Vorrichtung nach einem der vorhergehenden Ansprüche,
**dadurch gekennzeichnet, dass** alle Empfänger (16) eine gleich große Fläche aufweisen.

## Claims

1. Device for measuring the relative position of two objects which are able to be moved relative to each other along an axis or about an axis of rotation (D), said objects having a transmitter (12) which provides unpolarised light, having a polariser (20) and having at least two receivers (16) arranged to be radially adjacent, said receivers measuring the light intensity passing through the polariser (20) in order to generate a position-dependent signal, wherein a polarisation filter is arranged in front of the receivers (16) and wherein the receivers (16) and the polariser (20) move relative to one another depending on the relative position of the two objects, wherein the polariser (20) has at least two different polarisation directions,
**characterised in that**
the length (1) of the receivers (16) tangential to the direction (X) of the relative movement is dependent on the speed with which the region of the polariser (20) seen by the receiver (16) moves relative to the receiver (16).

2. Device according to claim 1,
**characterised in that**
the transmitter (14) emits a divergent beam of light.

3. Device according to one of the preceding claims,
**characterised in that**
the optical axis of the transmitter (14) is arranged parallel to the axis of rotation (D) and does not coincide with this.

4. Device according to one of the preceding claims,
**characterised in that**
the polariser (20) has a plurality of different polarisation directions, preferably at least sixteen different polarisation directions.

5. Device according to one of the preceding claims,
**characterised in that**
the polariser (20) has at least two regions (28, 29) having different polarisation directions which are formed to be adjacent to one another and preferably to be interlocked with one another.

6. Device according to one of the preceding claims,
**characterised in that**
the polariser (20) is formed as a disc or as a rod.

7. Device according to one of the preceding claims,
**characterised in that**
the polariser (20) is arranged on a surface which is formed to be flat or curved.

8. Device according to claim 6,
**characterised in that**
the formation of the polariser (20) as a disc, the path is formed as a circular path about the axis of rotation (D) of the disc and when the polariser (20) is formed as a rod, the path is formed as a shortest connection line between two points of the two opposite ends of the rod.

9. Device according to one of the preceding claims,
**characterised in that**
a polarisation filter is arranged in front of the at least two receivers (16) respectively, wherein the at least two polarisation filters have different polarisation directions.

10. Device according to one of the preceding claims,
**characterised in that**
the receiver (16) has a larger length (1) tangential to the direction of the relative movement of the two objects than the width (b) perpendicularly to the direction (X) of the relative movement.

11. Device according to one of the preceding claims,
**characterised in that**
the receiver (16) has a ring segment-shaped surface.

12. Device according to one of the preceding claims,
**characterised in that**
all receivers (16) have an equal size surface.

## Revendications

1. Dispositif permettant de mesurer la position relative de deux objets mobiles l'un par rapport à l'autre le long d'un axe ou autour d'un axe de rotation (D) comportant un émetteur (12) fournissant de la lumière non polarisée, un polariseur (20) et au moins deux récepteurs (16) montés radialement côte à côte et qui mesurent l'intensité de la lumière traversant le polariseur (20) pour engendrer un signal dépendant de la position, un filtre de polarisation étant monté en avant des récepteurs (16), le récepteur (16) et le polariseur (20) se déplaçant relativement l'un à l'autre en fonction de la position relative des deux objets et le polariseur (20) ayant au moins deux directions de polarisation différentes,
**caractérisé en ce que**
la longueur (1) du récepteur (16) tangentiellement à la direction (X) du mouvement relatif est dépendant de la vitesse à laquelle la zone du polariseur (20) vue par le récepteur (16) se déplace relativement au récepteur (16).

2. Dispositif conforme à la revendication 1,
**caractérisé en ce que**
l'émetteur (14) émet un cône lumineux divergent.

3. Dispositif conforme à l'une des revendications précédentes,
**caractérisé en ce que**
l'axe optique de l'émetteur (14) est parallèle à l'axe de rotation (D) et ne coïncide pas avec celui-ci.

4. Dispositif conforme à l'une des revendications précédentes,
**caractérisé en ce que**
le polariseur (20) a plusieurs directions de polarisation différente, de préférence au moins seize directions de polarisation différentes.

5. Dispositif conforme à l'une des revendications précédentes,
**caractérisé en ce que**
le polariseur (20) comprend au moins deux zones (28, 29) ayant des directions de polarisation différentes qui sont adjacentes et de préférence s'engrènent l'une dans l'autre.

6. Dispositif conforme à l'une des revendications précédentes,
**caractérisé en ce que**
le polariseur (20) est réalisé sous la forme d'un disque ou d'une barre.

7. Dispositif conforme à l'une des revendications précédentes,
**caractérisé en ce que**
le polariseur (20) est installé sur une surface plane ou courbe.

8. Dispositif conforme à la revendication 6,
**caractérisé en ce que**
lorsque le polariseur (20) est réalisé sous la forme d'un disque, le chemin optique est réalisé sous la forme d'une orbite circulaire autour de l'axe de rotation (D) de ce disque, et lorsque le polariseur (20) est réalisé sous la forme d'une barre, le trajet optique est réalisé sous la forme de la ligne de liaison la plus courte entre deux points des deux extrémités opposées de cette barre.

9. Dispositif conforme à l'une des revendications précédentes,
**caractérisé en ce que**,
à l'avant des récepteurs (16) est respectivement installé un filtre de polarisation, ces filtres de polarisation ayant des directions de polarisation différentes.

10. Dispositif conforme à l'une des revendications précédentes,
**caractérisé en ce que**
le récepteur (16) a, tangentiellement, à la direction de déplacement relatif des deux objets, une longueur (1) supérieure à sa largeur (b) perpendiculairement à la direction (X) du mouvement relatif.

11. Dispositif conforme à l'une des revendications précédentes,
**caractérisé en ce que**
le récepteur (16) a une surface en forme de segment annulaire.

12. Dispositif conforme à l'une des revendications précédentes,
**caractérisé en ce que**
tous les récepteurs (16) ont des surfaces de même dimension.
